(19)

Europäisches
Patentamt
European
Patent Office
Office européen
des brevets

(11) **EP 4 350 024 A1**

(12) **EUROPEAN PATENT APPLICATION**
published in accordance with Art. 153(4) EPC

(43) Date of publication:
**10.04.2024 Bulletin 2024/15**

(21) Application number: **22816251.7**

(22) Date of filing: **27.01.2022**

(51) International Patent Classification (IPC):
*C22C 38/50* (2006.01)   *C22C 38/54* (2006.01)
*C22C 38/44* (2006.01)   *C22C 38/06* (2006.01)
*C21D 8/02* (2006.01)   *B21C 47/02* (2006.01)

(52) Cooperative Patent Classification (CPC):
**C22C 38/06; B21C 47/02; C21D 8/02;
C22C 38/002; C22C 38/02; C22C 38/04;
C22C 38/44; C22C 38/48; C22C 38/50;
C22C 38/54; C23C 2/12; C23C 2/40;** B32B 15/012;
C21D 8/0205; C21D 8/0226;   (Cont.)

(86) International application number:
**PCT/KR2022/001481**

(87) International publication number:
**WO 2022/255587 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.06.2021   KR 20210072973**

(71) Applicant: **Hyundai Steel Company
Incheon 22525 (KR)**

(72) Inventors:
• **YOO, Byung Gil
Incheon 22525 (KR)**
• **KIM, Je Woo Soo
Incheon 22525 (KR)**
• **DO, Hyeong Hyeop
Incheon 22525 (KR)**
• **HAN, Seong Kyung
Incheon 22525 (KR)**

(74) Representative: **Viering, Jentschura & Partner
mbB
Patent- und Rechtsanwälte
Am Brauhaus 8
01099 Dresden (DE)**

(54) **STEEL SHEET FOR HOT STAMPING AND METHOD FOR MANUFACTURING SAME**

(57)   According to an aspect of the present disclosure, a steel sheet for hot stamping is provided. The steel sheet for hot stamping includes an amount of 0.17 wt% to 0.25 wt% of carbon (C), an amount of 0.3 wt% to 1.0 wt% of silicon, an amount of 0.6 wt% to 1.0 wt% of manganese (Mn), an amount of 0.02 wt% or less of phosphorus (P), an amount of 0.01 wt% or less of sulfur (S), an amount of 0.1 wt% to 1.0 wt% of aluminum (Al), an amount of 0.001 wt% to 0.005 wt% of boron (B), an amount of 0.01 wt% to 0.1 wt% of titanium (Ti), an amount of 0.02 wt% to 0.06 wt% of niobium (Nb), an amount of 0.3 wt% to 1.0 wt% of a sum of at least one of chromium (Cr), nickel (Ni), and molybdenum (Mo), and the balance of iron (Fe) and other unavoidable impurities. A microstructure includes ferrite in an amount 60% to 99% and pearlite in an amount of 1% to 30% by area fraction, and comprises first regions in which pearlite including carbon (C) in an amount of 0.19 wt% to 0.55 wt% and manganese (Mn) in an amount of 0.8 wt% to 6.0 wt% are locally accumulated.

FIG. 2

30 μm

**(Cont. next page)**

(52) Cooperative Patent Classification (CPC): (Cont.)
C21D 8/0236; C21D 8/0263; C21D 9/0081

**Description**

**TECHNICAL FIELD**

The present disclosure relates to a steel sheet for hot stamping and a method of manufacturing the steel sheet, and more particularly, to a steel sheet for hot stamping that allows a molded component after hot stamping to have excellent mechanical properties of high strength and high toughness, and a method of manufacturing the steel sheet.

**BACKGROUND**

A high-strength steel is used to manufacture light-weight and stable automobile parts. On the other hand, the high-strength steel may offer high-strength properties compared to its weight, but as the strength increases, press formability is reduced, which results in breakage of the material during processing or a spring-back phenomenon, and thus, it is difficult to form products with complex and precise shapes.

As a method to improve these problems, a hot stamping method has been used, and thus, research on materials for hot stamping has been actively conducted. For example, as disclosed in Korean Patent Application Laid-Open No. 10-2017-0076009, a hot stamping method is a molding technology for manufacturing a high-strength component by heating a steel sheet for hot stamping at a high temperature and then rapidly cooling it at the same time while molding in a press mold.

In addition, as disclosed in Korean Patent Application Laid-Open No. 10-2019-0095858, as a representative example of a steel sheet for hot stamping, so-called boron steel (22MnB5) including carbon (C), and manganese (Mn), boron (B), etc. as elements for improving heat treatment performance is used.

**SUMMARY**

Technical Problem

However, in the case of a steel sheet for hot stamping and a method of manufacturing the same of the related art, due to the difference in strength by region caused by components and microstructures included in the steel sheet for hot stamping, mechanical properties, such as tensile strength and bending characteristics of a molded component after hot stamping deteriorate.

Exemplary embodiments of the present disclosure are intended to solve various problems including the above problems, and to provide a steel sheet for hot stamping, by which a molded component after hot stamping has excellent mechanical properties of high strength and high toughness, and a method of manufacturing the same. However, these problems are exemplary, and the scope of the present disclosure is not limited thereto.

Technical Solution

According to an aspect of the present disclosure, a steel sheet for hot stamping includes an amount of 0.17 wt% to 0.25 wt% of carbon (C), an amount of 0.3 wt% to 1.0 wt% of silicon, an amount of 0.6 wt% to 1.0 wt% of manganese (Mn), an amount of 0.02 wt% or less of phosphorus (P), an amount of 0.01 wt% or less of sulfur (S), an amount of 0.1 wt% to 1.0 wt% of aluminum (Al), an amount of 0.001 wt% to 0.005 wt% of boron (B), an amount of 0.01 wt% to 0.1 wt% of titanium (Ti), an amount of 0.02 wt% to 0.06 wt% of niobium (Nb), an amount of 0.3 wt% to 1.0 wt% of a sum of at least one of chromium (Cr), nickel (Ni), and molybdenum (Mo), and the balance of iron (Fe) and other unavoidable impurities. A microstructure includes ferrite in a range from 60% to 99% and pearlite in an amount of 1% to 30% by area fraction, and includes first regions in which pearlite including carbon (C) in an amount of 0.19 wt% to 0.55 wt% and manganese (Mn) in an amount of 0.8 wt% to 6.0 wt% is locally accumulated.

According to an exemplary embodiment, when long sides of the first regions are defined as a length of the first regions, an average length of the first regions may be 0.01 $\mu$m or greater and 300 $\mu$m or less.

According to an exemplary embodiment, when short sides of the first regions are defined as a thicknesses of the first regions, an average thickness of the first regions may be 0.01 $\mu$m or greater and 5 $\mu$m or less.

According to an exemplary embodiment, linear density in a short side direction of the first regions may be 0.001/$\mu$m or greater and 0.1/$\mu$m or less.

According to an exemplary embodiment, an area fraction of the first regions may be 0.01% or greater and 15% or less.

According to an exemplary embodiment, the microstructure may further include second regions in which pearlite including carbon (C) in an amount greater than 0.55 wt% or pearlite including manganese (Mn) in an amount greater than 6.0 wt% is locally accumulated, wherein an area fraction of the second regions may be 5% or less.

According to an exemplary embodiment, a molded component after hot stamping may have a tensile strength of 1,350 MPa or greater, and a bending angle in a range of 61° to 80° is satisfied.

According to an aspect of the present disclosure, a method of manufacturing a steel sheet for hot stamping includes reheating a slab including an amount of 0.17 wt% to 0.25 wt% of carbon (C), an amount of 0.3 wt% to 1.0 wt% of silicon (Si), an amount of 0.6 wt% to 1.0 wt% of manganese (Mn), an amount of 0.02 wt% or less of phosphorus (P), an amount of 0.01 wt% or less of sulfur (S), an amount of 0.1 wt% to 1.0 wt% of aluminum (Al), an amount of 0.001 wt% to 0.005 wt% of boron (B), an amount of 0.01 wt% to 0.1 wt% of titanium (Ti), an amount of 0.02 wt% to 0.06 wt% of niobium (Nb), an amount of 0.3 wt% to 1.0 wt% of a sum of at least one of chromium (Cr), an amount of nickel (Ni), and molybdenum (Mo), and the balance of iron (Fe) and other unavoidable impurities at a temperature in a range from 1,200 °C to 1,250 °C, manufacturing a steel sheet by hot rolling the reheated slab at a temperature in a range from 860 °C to 950 °C with a reduction ratio of 95% or greater, and coiling the steel sheet at a temperature in a range from 550 °C to 680 °C. A microstructure of the coiled steel sheet may include ferrite in a range from 60% to 99% and pearlite in a range from 1% to 30% by area fraction, and first regions in which pearlite including carbon (C) in a range from 0.19 wt% to 0.55 wt% and manganese (Mn) in a range from 0.8 wt% to 6.0 wt% are locally accumulated.

According to an exemplary embodiment, the method may further include cooling the steel sheet to a temperature of from the martensitic transformation initiation temperature (Ms) to a pearlite transformation initiation temperature (Ps) + 40 °C for a time of 30 seconds or less, and the coiling may be coiling the cooled steel sheet.

According to an exemplary embodiment, when long sides of the first regions are defined as a length of the first regions, an average length of the first regions may be 0.01 $\mu$m or greater and 300 $\mu$m or less.

According to an exemplary embodiment, when short sides of the first regions are defined as a thicknesses of the first regions, an average thickness of the first regions may be 0.01 $\mu$m or greater and 5 $\mu$m or less.

According to an exemplary embodiment, linear density in a short side direction of the first regions may be 0.001/$\mu$m or greater and 0.1/$\mu$m or less.

According to an exemplary embodiment, an area fraction of the first regions may be 0.01% or greater and 15% or less.

According to an exemplary embodiment, the microstructure may further include second regions in which pearlite including carbon (C) in an amount greater than 0.55 wt% or pearlite including manganese (Mn) in an amount greater than 6.0 wt% is locally accumulated, and an area fraction of the second regions may be 5% or less.

According to an exemplary embodiment, a molded component after hot stamping may have a tensile strength of 1,350 MPa or greater, and a bending angle in a range of 61° to 80° is satisfied.

Other aspects, features, and advantages other than those described above will become apparent from the following detailed description, claims and drawings for carrying out the present disclosure.

Advantageous Effects

According to an exemplary embodiment of the present disclosure made as described above, it is possible to implement a steel sheet for hot stamping, by which a molded component after hot stamping has excellent mechanical properties of high strength and high toughness, and a method of manufacturing the steel sheet. Specifically, by controlling a strength difference by region of a steel sheet for hot stamping through characteristic control of components and microstructures included in the steel sheet for hot stamping, the steel sheet for stamping, by which a molded component after hot stamping has excellent mechanical properties of high strength and high toughness, and a method of manufacturing the steel sheet may be implemented. According to an exemplary embodiment of the present disclosure, of course, the scope of the present disclosure is not limited by these effects.

**BRIEF DESCRIPTION OF DRAWINGS**

FIG. 1 is an image showing a portion of a microstructure of a steel sheet for hot stamping of the related art;
FIG. 2 is an image showing a portion of a microstructure of a steel sheet for hot stamping according to an exemplary embodiment of the present disclosure;
FIG. 3 is a flowchart schematically illustrating a portion of a method of manufacturing a steel sheet for hot stamping according to an exemplary embodiment of the present disclosure;
FIG. 4 is an image showing a portion of a microstructure of a molded component after hot stamping, according to an exemplary embodiment of the present disclosure; and
FIG. 5 is an image showing a portion of a crystal grain of a microstructure of a molded component after hot stamping, according to an exemplary embodiment of the present disclosure.

**DETAILED DESCRIPTION**

As the present disclosure allows for various changes and numerous embodiments, particular embodiments will be illustrated in the drawings and described in detail in the written description. The advantages, features, and methods of achieving the advantages of the present disclosure may be clear when referring to the embodiments described below together with the drawings. However, the present disclosure may have different forms and should not be construed as being limited to the descriptions set forth herein.

It will be understood that, although the terms "first", "second", "third", etc., may be used herein to describe various elements, these elements should not be limited by these terms. These terms are only used to distinguish one element from another.

In the following embodiments, the singular forms include the plural forms unless the context clearly indicates otherwise.

It will be further understood that the terms "comprises" and/or "comprising," when used in this specification, specify the presence of stated features or constituent elements but do not preclude the presence or addition of one or more other features or constituent elements.

In the drawings, thicknesses of layers and regions may be exaggerated or reduced for convenience of explanation. For example, the sizes and thicknesses of elements in the drawings are arbitrarily expressed for convenience of explanation, and thus, the current inventive concept is not limited to the drawings.

When a certain embodiment may be implemented differently, a specific process order may be performed differently from the described order. For example, two consecutively described processes may be performed substantially at the same time or performed in an order opposite to the described order.

In the present disclosure, as used herein, "A and/or B" refers to A, B, or A and B. Also, "at least one of A and B" represents the case of A, B, or A and B.

Hereafter, the present disclosure will be described more fully with reference to the accompanying drawings. In describing the present disclosure with reference to drawings, like reference numerals are used for elements that are substantially identical or correspond to each other, and the description thereof will be omitted.

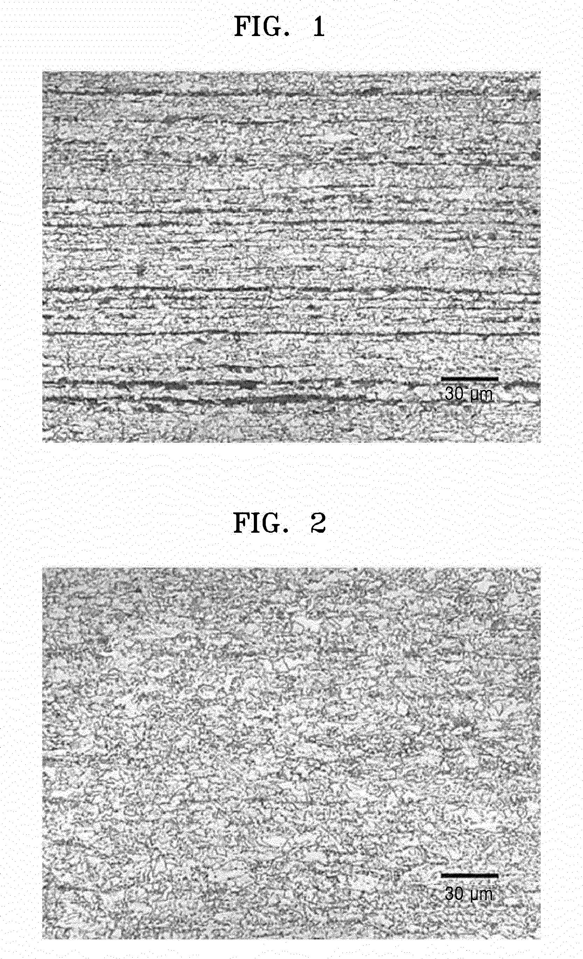

FIG. 1 is an image showing a portion of a microstructure of a steel sheet for hot stamping of the related art. Specifically, FIG. 1 is an image showing a steel sheet of 22MnB5 component that is conventionally used as a steel sheet for hot stamping.

The microstructure of the 22MnB5 component steel sheet may include ferrite and pearlite. Meanwhile, carbon (C) and/or manganese (Mn) may be segregated in pearlite. That is, the microstructure of the steel sheet for hot stamping may include pearlite having a relatively high content of carbon (C) and/or manganese (Mn). In addition, pearlite having a relatively high content of carbon (C) and/or manganese (Mn) may be locally accumulated in a steel sheet for hot stamping. That is, the microstructure of the steel sheet for hot stamping may include a region in which pearlite having a relatively high carbon (C) content and/or manganese (Mn) content is locally accumulated (hereinafter referred to as a "pearlite region").

In an exemplary embodiment, the pearlite region may be formed in a belt shape (or band shape) in the steel sheet for hot stamping as shown in FIG. 1.

The strength in the pearlite region of the steel sheet for hot stamping is different from the strength in regions other than the pearlite region. Specifically, the pearlite region may have relatively high strength, and regions other than the pearlite region may have relatively low strength. That is, the strength of the pearlite region may be relatively higher than that of the regions other than the pearlite region. Accordingly, the steel sheet for hot stamping has a strength difference for each region. The difference in strength for each region may act as a factor for lowering mechanical properties, such as tensile strength, yield strength, bending characteristics, and elongation of a molded component after hot stamping. Therefore, it is necessary to control the size, density, area fraction, etc. of the pearlite region included in the steel sheet for hot stamping.

According to exemplary embodiments of the present disclosure, by controlling the content of materials constituting the steel sheet for hot stamping, the configuration of the microstructure of the steel sheet for hot stamping, and process conditions for manufacturing the steel sheet for hot stamping, the size, density, and area fraction of the pearlite region included in the steel sheet for hot stamping may be controlled. In this way, it is possible to realize a steel sheet for hot stamping that may satisfy the mechanical properties required for molded components after hot stamping.

FIG. 2 is an image showing a portion of a microstructure of a steel sheet for hot stamping according to an exemplary embodiment of the present disclosure.

Specifically, FIG. 2 is an image showing a steel sheet for hot stamping manufactured by controlling the content of materials constituting the steel sheet for hot stamping, the composition of a microstructure of the steel sheet for hot stamping, and the process conditions for manufacturing the steel sheet for hot stamping to satisfy preset conditions.

Referring to FIG. 2, it may be confirmed that the region in which pearlite having a relatively high content of carbon (C) and/or manganese (Mn) is locally accumulated is significantly reduced compared to the steel sheet of FIG.

1. Specifically, it may be seen that the belt-shaped (or band-shaped) region included in the steel sheet of FIG. 1 is remarkably reduced in the steel sheet of FIG. 2. It may be understood as a result of controlling the content of materials constituting the steel sheet for hot stamping, the microstructure of the steel sheet for hot stamping, and the process conditions for manufacturing the steel sheet for hot stamping to satisfy preset conditions, which will be described later.

The steel sheet for hot stamping may be a steel sheet manufactured by performing a hot rolling process and/or a cold rolling process on a slab cast to include a predetermined alloying element in a predetermined content.

A steel sheet for hot stamping may include carbon (C), silicon (Si), manganese (Mn), phosphorus (P), sulfur (S), aluminum (Al), chromium (Cr), boron (B), titanium (Ti), molybdenum (Mo), niobium (Nb), nickel (Ni), and a balance iron (Fe) and other unavoidable impurities. In an exemplary embodiment, the steel sheet for hot stamping may include carbon (C) in an amount of 0.17 to 0.25 wt%, silicon (Si) in an amount of 0.3 to 1.0 wt%, manganese (Mn) in an amount of 0.6 to 1.0 wt%, phosphorus (P) in an amount of 0.02 wt % or less, sulfur (S) in an amount of 0.01 wt% or less, aluminum (Al) in an amount of 0.1 to 1.0 wt%, boron (B) in an amount of 0.001 to 0.005 wt%, titanium (Ti) in an amount of 0.01 to 0.1 wt%, niobium (Nb) in an amount of 0.02 to 0.06 wt%, the sum of at least one of chromium (Cr), nickel (Ni), and molybdenum (Mo) in an amount of 0.3 to 1.0 wt%, and a balance iron (Fe) and other unavoidable impurities may be included.

As described above, hardenability may be improved by controlling the sum of at least one of chromium (Cr), nickel (Ni), and molybdenum (Mo) to satisfy a preset range. In an optional embodiment, the content of chromium (Cr) included in the steel sheet for hot stamping may satisfy 0.1 to 0.6 wt%. In addition, the content of nickel (Ni) included in the steel sheet for hot stamping may satisfy 0.001 to 0.3wt%. In addition, the content of molybdenum (Mo) included in the steel sheet for hot stamping may satisfy 0.1 to 0.4wt%.

On the other hand, in one embodiment, the content of each of carbon (C), silicon (Si), manganese (Mn), phosphorus (P) and sulfur (S) included in the steel sheet for hot stamping is expressed as [C], [Si], [Mn], [P] and [S] in wt%, the following formula 1 may be satisfied.

[Equation 1]

$$[C]+[Si]/30+[Mn]/20+2*[P]+4*[S]<0.35$$

When the above-mentioned conditions are satisfied, it is possible to prevent the increase in brittleness and improve the weld strength of a molded component after hot stamping. For example, the cross-tension strength (CTS) of the weld may satisfy 10 kN/spot or greater.

Carbon (C) functions as an austenite stabilizing element in a steel sheet. Carbon is a major element that determines the strength and hardness of a steel sheet, and is added for the purpose of increasing hardenability and strength during heat treatment. Carbon may be included in an amount of 0.17 wt% to 0.25 wt% based on the total weight of the steel sheet. When the carbon content is less than 0.17 wt%, it is difficult to secure a hard phase (e.g., martensite, etc.), and thus, it is difficult to satisfy the mechanical strength of a molded component after hot stamping. In contrast, when the carbon content exceeds 0.25 wt %, it may cause deterioration of processability of a steel sheet or deterioration of a bending performance of the molded component after hot stamping.

Silicon (Si) functions as a ferrite stabilizing element in a steel sheet. Silicon, as a solid solution strengthening element, improves the strength of a steel sheet, and improves the carbon concentration in austenite by suppressing the formation of carbides in a low-temperature region. In addition, silicon is a key element in hot-rolling, cold-rolling, hot-pressing tissue homogenization, and fine dispersion of ferrite. Silicon serves as a martensitic strength heterogeneity control element to improve collision performance. Silicon may be included in an amount of 0.3 wt% to 1.0 wt% based on the total weight of the steel sheet. When the content of silicon is less than 0.3wt%, it is difficult to obtain the above-described effect, and cementite formation and coarsening may occur in the martensitic structure of the molded component after hot stamping. In contrast, when the content of silicon exceeds 1.0 wt%, the load of hot rolling and cold rolling may increase, and the plating properties of a steel sheet may be deteriorated.

Manganese (Mn) functions as an austenite stabilizing element in a steel sheet. Manganese is added to increase hardenability and strength during heat treatment. Manganese may be included in an amount of 0.6 wt% to 1.0 wt% based on the total weight of the steel sheet. When the manganese content is less than 0.6 wt%, the hardenability effect may not be sufficient, and the hard phase fraction in a molded component after hot stamping may be insufficient due to insufficient hardenability. On the other hand, when the content of manganese exceeds 1.0 wt%, a region where the pearlite in which manganese is segregated is concentrated may be generated, and thus, ductility and toughness may be reduced, and also deterioration of a bending performance of a molded component after hot stamping and generation of an inhomogeneous microstructure may occur.

Phosphorus (P) is an element contributing to strength improvement. Phosphorus may be included in an amount greater than 0 and 0.02 wt% or less based on the total weight of the steel sheet in order to prevent deterioration of toughness of the steel sheet. When the phosphorus content exceeds 0.02wt%, an iron phosphide compound is formed resulting in deterioration of toughness and weldability, and cracks may be induced in a steel sheet during a manufacturing process.

Sulfur (S) is an element contributing to processability improvement. Sulfur may be included in an amount greater than 0 and 0.01 wt% or less based on the total weight of the steel sheet. If the content of sulfur exceeds 0.01wt%, hot processability, weldability, and impact properties are deteriorated, and surface defects such as cracks may occur due to the formation of large inclusions.

Aluminum (Al) functions as a ferrite stabilizing element in a steel sheet. Aluminum, as a solid solution strengthening element, improves the strength of a steel sheet and improves the carbon concentration in austenite by suppressing the formation of carbides in a low-temperature region. Aluminum acts as a martensitic strength heterogeneity control element, and serves to improve impact performance. Aluminum may be included in an amount of 0.1 wt% to 1.0 wt% based on the total weight of the steel sheet. When the content of aluminum is less than 0.1wt%, it is difficult to obtain the above-described effect, and cementite formation and coarsening may occur in the martensitic tissue of the molded component after hot stamping. In contrast, when the content of aluminum exceeds 1.0wt%, the load of hot rolling and cold rolling may increase, and the plating properties of a steel sheet may be deteriorated.

Meanwhile, as one embodiment, in order to improve plating properties, the sum of the respective contents of silicon (Si) and aluminum (Al) included in a steel sheet for hot stamping may be controlled to satisfy a preset range. For example, the sum of the respective contents of silicon (Si) and aluminum (Al) included in a steel sheet for hot stamping may satisfy a range from 0.4 wt% to 1.5 wt%.

Chromium (Cr) is added for the purpose of improving hardenability and strength during heat treatment. Chromium enables grain refinement and strength secure through precipitation hardening. Chromium may be included in an amount of 0.1 wt% to 0.6 wt% based on the total weight of the steel sheet. When the content of chromium is less than 0.1wt%, the precipitation hardening effect is low, and on the contrary, when the content of chromium exceeds 0.6wt%, Cr-based precipitates and matrix solid solution increase resulting in lower toughness, and production cost may increase due to increased material cost.

Boron (B) is added for the purpose of securing hardenability and strength during heat treatment because boron secures a martensite tissue by suppressing the transformation of ferrite, pearlite and bainite. In addition, boron is segregated at grain boundaries to increase hardenability by lowering grain boundary energy, and has an effect of grain refinement by increasing austenite grain growth temperature. Boron (B) may be included in an amount of 0.001 wt% to 0.005 wt% based on the total weight of the steel sheet. When boron is included in the above range, it is possible to prevent the occurrence of brittleness at a hard phase grain boundary, and secure high toughness and bendability. When the content of boron is less than 0.001 wt%, the hardenability effect is insufficient, and on the contrary, when the content of boron exceeds 0.005 wt%, because the solid solubility of boron is low, boron may be easily precipitated at a grain boundary depending on the heat treatment conditions, which may be a cause of deterioration of the hardenability or embrittlement at high temperatures, and toughness and bendability may be reduced due to the occurrence of hard phase intergranular embrittlement.

Titanium (Ti) may effectively contribute to grain refinement by forming precipitates at a high temperature. Titanium may be included in an amount of 0.01 wt% to 0.1 wt%, preferably in an amount from 0.02 wt% to 0.06 wt%, based on the total weight of the steel sheet. When titanium is included in the content range described above, a poor performance and coarsening of precipitates may be prevented, physical properties of the steel may be easily secured, and defects such as cracks on the surface of the steel may be prevented. When the content of titanium is less than the lower limit, the effect may not be properly obtained. On the other hand, when the content of titanium exceeds the upper limit, the precipitates are coarsened, and thus, elongation and bendability may decrease.

Molybdenum (Mo) is a substitutional element and improves the strength of steel through a solid solution strengthening effect. Molybdenum is added for the purpose of suppressing coarsening of precipitates and improving hardenability. In addition, molybdenum may serve to improve the hardenability of the steel. Molybdenum may be included in an amount of 0.1 wt% to 0.4 wt% based on the total weight of the steel sheet. When the content of molybdenum is less than 0.1 wt%, the above effect may not be properly obtained. On the other hand, when the content of molybdenum exceeds 0.4wt%, there is a risk of reduction in rolling productivity and elongation, and there is a problem in that only the manufacturing cost is increased without additional effect.

Niobium (Nb) may increase strength and toughness according to a decrease in martensite packet size. Niobium may be included in an amount of 0.02 wt% to 0.06 wt% based on the total weight of the steel sheet. When niobium is included in the range described above, the crystal grain refinement effect of the steel sheet is excellent in a hot rolling and cold rolling process, the cause of cracks in a slab during steelmaking/casting and brittle fracture of products may be prevented, and the generation of coarse precipitates in steelmaking may be minimized. When the content of niobium is less than 0.02wt%, the above effect may not be properly obtained. On the other hand, when the content of niobium exceeds 0.06 wt%, strength and toughness according to the increase of the niobium content may not improve any more, and there is a risk of lowering impact toughness rather than being present in a solid solution state in ferrite.

Nickel (Ni) is an effective element for improving toughness while improving hardenability. Nickel may be included in an amount of 0.001 wt % to 0.3 wt % based on the total weight of the steel sheet. When the content of nickel is less than 0.001 wt%, the effect of the addition is insignificant. On the other hand, when the content of nickel exceeds 0.3wt%, there is a problem in that the processability of the steel sheet is reduced and the manufacturing cost is increased.

The microstructure of the steel sheet for hot stamping may include ferrite and pearlite. In one embodiment, the steel sheet for hot stamping may include ferrite in an amount of 60 % to 99% and pearlite in an amount of 1% to 30% by area fraction. In addition, the steel sheet for hot stamping may include other unavoidable structures. For example, the steel sheet for hot stamping may include an amount of 0% or greater and less than 5% of other unavoidable structures. Meanwhile, in an embodiment, the average grain size of ferrite included in the steel sheet for hot stamping may be controlled to satisfy 2 $\mu$m or greater and 10 $\mu$m or less.

Because carbon (C) and/or manganese (Mn) may be segregated in pearlite, the microstructure of a steel sheet for hot stamping may include pearlite having a relatively high carbon content and/or manganese content. In addition, a pearlite region may be formed in the steel sheet by locally accumulating pearlite having a relatively high carbon content and/or manganese content. Here, "pearlite region" may denote a region in which pearlite having a relatively high carbon content and/or manganese content is locally accumulated.

As a method of minimizing the pearlite region included in a steel sheet for hot stamping, there is a method of lowering the content of carbon (C) and manganese (Mn). However, this method may cause a problem of reducing the hardenability of the steel sheet for hot stamping and the mechanical properties of a molded component after hot stamping. Therefore, a steel sheet for hot stamping according to an exemplary embodiment of the present disclosure may be controlled to include carbon and manganese as much as an optimized content described above and may be controlled so that the size, density, and area fraction of the pearlite region of the steel sheet for hot stamping satisfy a preset condition. Through the control, mechanical properties, such as tensile strength, yield strength, bending property, and elongation of the molded component after hot stamping may be controlled. For example, the tensile strength of the molded component after hot stamping may satisfy 1,350 MPa or greater, preferably 1,350 MPa or greater, and 1,650 MPa or less. In addition, the yield strength of the molded component after hot stamping may satisfy 950 MPa or greater, preferably 950 MPa or greater, and 1,200 MPa or less. In addition, the molded component after hot stamping satisfies a bending angle in a range from 61° to 80°, and may have an elongation of 6% or greater. Here, the "bending angle" may denote a V-bending angle in a rolling direction (RD).

In an exemplary embodiment, the tensile strength of the molded component after hot stamping may be controlled to satisfy a preset range based on a correlation with the content of carbon (C). Specifically, when the tensile strength of the molded component after hot stamping is expressed as X1 (unit: MPa), and the carbon content is expressed as [C] in weight %, the tensile strength X1 of the molded component after hot stamping may be controlled to satisfy Equation 2A.

$$[Equation\ 2A]$$
$$0.9*y1 \leq X1 \leq 1.1*y1$$
$$(y1 = 1,093 + 1,625*[C])$$

In an exemplary embodiment, a bending angle of a molded component after hot stamping may be controlled to satisfy a preset range based on a correlation with the content of carbon (C). Specifically, when the bending angle of the molded component after hot stamping is expressed in X2 (unit: °, and the carbon content is expressed as [C] in weight %, the bending angle X2 of the molded component after hot stamping may be controlled to satisfy the following Equation 2B.

$$[Equation\ 2B]$$
$$0.9*y2 \leq X2 \leq 1.1*y2$$
$$(y2 = 131 - 265*[C])$$

In an exemplary embodiment, a bending angle of a molded component after hot stamping may be controlled to satisfy a preset range based on a correlation with the content of manganese (Mn). Specifically, when the bending angle of the molded component after hot stamping is expressed as X2 (unit: °, and the manganese content is expressed as [Mn] in wt%, the bending angle (X2) of the molded component after hot stamping may be controlled to satisfy the following Equation 2C.

[Equation 2C]

$$0.9*y3 \leq X2 \leq 1.1*y3$$

$$(y3=98-30*[Mn])$$

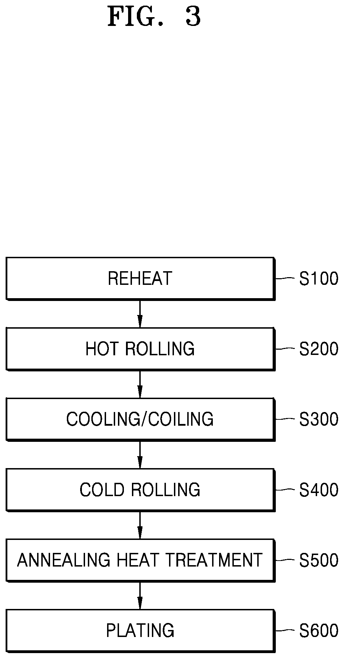

On the other hand, the configuration of the microstructure of a steel sheet for hot stamping, that is, the conditions of size, density, and area fraction of a pearlite region may be controlled by adjusting process conditions of the steel sheet for hot stamping. A detailed description thereof will be described later with reference to FIG. 3.

In a pearlite region, the degree of influence on mechanical properties of a molded component after hot stamping may be different depending on the content of carbon (C) and manganese (Mn) included in pearlite integrated in the pearlite region. Specifically, a region in which pearlite including 0.19 wt% or greater carbon and 0.8 wt% or greater manganese is locally concentrated affects the mechanical properties of the molded component after hot stamping. On the other hand, a region in which a carbon content of 0.19wt% or less or a manganese content of 0.8 wt% or less is locally concentrated has little effect on the mechanical properties of the molded component after hot stamping. Therefore, in the steel sheet for hot stamping according to an embodiment of the present disclosure, the size, density, and area fraction of a region in which pearlite including 0.19 wt% or greater of carbon and 0.8 wt% or greater of manganese is locally concentrated are controlled to satisfy preset conditions.

The steel sheet for hot stamping according to an embodiment of the present disclosure may include first regions in which pearlite including carbon (C) in an amount of 0.19 wt% to 0.55 wt% and/or pearlite including manganese (Mn) in an amount of 0.8 wt% to 6.0 wt% are locally accumulated. The size, density, and area fraction of the first regions may be controlled to satisfy preset conditions.

In an exemplary embodiment, when long sides of the first regions are defined as a length of the first regions, an average length of the first regions may be controlled to satisfy 0.01 $\mu$m or greater and 300 $\mu$m or less. Also, when short sides of the first regions are defined as a thicknesses of the first regions, an average thickness of the first regions may be controlled to satisfy 0.01 $\mu$m or greater and 5 $\mu$m or less.

In an exemplary embodiment, the linear density in a short side direction of the first regions may be controlled to satisfy 0.001/$\mu$m or greater and 0.1/$\mu$m or less.

In an exemplary embodiment, the area fraction of the first regions may be controlled to satisfy 0.01% or greater and 15% or less.

The steel sheet for hot stamping may further include second regions in which pearlite including greater than 0.55 wt% of carbon (C) and/or pearlite including greater than 6.0 wt% of manganese (Mn) are locally accumulated. The second regions may reduce tensile strength and bending property of a molded component after hot stamping, and thus, may be controlled to be less than or equal to a preset area fraction. In an exemplary embodiment, the area fraction of the second regions may be controlled to satisfy 0% or greater and 5% or less.

That is, pearlite included in the steel sheet for hot stamping may include first regions of 0.01% or greater and 15% or less and the second regions of 0% or greater and 5% or less by area fraction. Here, the first regions are regions in which pearlite including carbon (C) in an amount of 0.19 wt% to 0.55 wt% and/or pearlite including manganese (Mn) in an amount of 0.8 wt% to 6.0 wt% are locally accumulated. In addition, the second regions are regions in which pearlite including greater than 0.55 wt% of carbon (C) and/or pearlite including greater than 6.0 wt% of manganese (Mn) are locally accumulated. On the other hand, among the pearlite included in the steel sheet for hot stamping, a region excluding the first and second regions may be understood to be pearlite including less than 0.19 wt% of carbon (C) and less than 0.8 wt% of manganese (Mn).

FIG. 3 is a flowchart schematically illustrating a part of a method of manufacturing a steel sheet for hot stamping according to an embodiment of the present disclosure.

As shown in FIG. 3, the method of manufacturing a component for hot stamping according to an embodiment of the present disclosure may include a reheating (S100), a hot rolling (S200), a cooling/coiling (S300), a cold rolling (S400)), an annealing heat treatment (S500), and a plating (S600).

For reference, in FIG. 3, although operations S100 to S600 are shown as independent operations, some of operations S100 to S600 may be performed in a single process, and some of operations S100 to S600 may be omitted if necessary.

First, a slab in a semi-finished state to be subjected to a process of forming a steel sheet for hot stamping is prepared. The slab may include an amount of 0.17 wt% to 0.25 wt% of carbon (C), an amount of 0.3 wt% to 1.0 wt% of silicon (Si), an amount of 0.6 wt% to 1.0 wt% of manganese (Mn), an amount of 0.02 wt% or less of phosphorus (P), an amount of 0.01 wt% or less of sulfur (S), an amount of 0.1 wt% to 1.0 wt% of aluminum (Al), an amount of 0.001 wt% to 0.005 wt% of boron (B), an amount of 0.01 wt% to 0.1 wt% of titanium (Ti), an amount of 0.02 wt% to 0.06 wt% of niobium (Nb), an amount of 0.3 wt% to 1.0 wt % of a sum of one or more of chromium (Cr), nickel (Ni), and molybdenum (Mo), and the balance iron (Fe) and other unavoidable impurities. In addition, in an optional embodiment, the content of chromium (Cr) included in the slab may satisfy a range from 0.1 wt% to 0.6 wt%. In addition, the content of nickel (Ni) included in the slab may satisfy a range from 0.001 wt% to 0.3 wt%. In addition, the content of molybdenum (Mo) included in the slab may satisfy a range from 0.1 wt% to 0.4 wt%.

The reheating (S100) is an operation of reheating the slab having the above composition in a predetermined slab reheating temperature (SRT) range for hot rolling. In the reheating operation (S100), a component segregated during casting is re-dissolved through reheating the slab secured through a continuous casting process in a predetermined temperature range. The SRT may be controlled within a preset temperature range to maximize the effect of austenite refining and precipitation hardening.

In an exemplary embodiment, the SRT may be controlled in a range from 1,200 °C to 1,250 °C. When the SRT is less than 1,200 °C, there is a problem in that the component segregated during casting (e.g., Ti, Nb, Mo, etc.) is not sufficiently re-dissolved, and thus, it is difficult to acquire a large effect of homogenization of alloy elements. On the other hand, the higher the SRT, the more favorable for homogenization, but when the SRT exceeds 1,250 °C, a grain size of austenite increases, it is difficult to secure strength, and only the manufacturing cost of the steel sheet may increase due to an excessive heating process.

The hot rolling (S200) is an operation of manufacturing a steel sheet by hot rolling the slab reheated in the reheating (S100) within a predetermined finishing delivery temperature (FDT) range.

In an exemplary embodiment, the FDT may be controlled in a range from 860 °C to 950 °C. When the FDT is less than 860 °C, it is difficult to secure workability of the steel sheet due to the occurrence of a duplex grain structure due to rolling in an abnormal region, workability is deteriorated due to microstructure non-uniformity, and a problem of passing ability during hot rolling due to a sudden phase change occurs. In contrast, when the FDT exceeds 950 °C, austenite grains are coarsened and it may be difficult to secure strength.

In an exemplary embodiment, a reduction ratio during hot rolling may be controlled to satisfy 95% or greater. Through the control of reduction ratio, the size, density, and area fraction of a region (pearlite region) in which pearlite having a relatively high content of carbon (C) and/or manganese (Mn) is locally accumulated may be controlled to satisfy the above-mentioned conditions..

Meanwhile, in the reheating (S100) and the hot rolling (S200), some of the fine precipitates may be precipitated at a grain boundary in which energy is unstable. In this case, the fine precipitates precipitated at the grain boundary may act as a factor that hinders the grain growth of austenite, thereby providing an effect of improving strength through austenite refinement.

The cooling/coiling S300 may include cooling a hot-rolled steel sheet in the hot rolling S200 and coiling the cooled steel sheet.

The cooling of the hot-rolled steel sheet may be an operation of run out table (ROT) cooling the hot-rolled steel sheet for a preset cooling time to a predetermined cooling end temperature range.

In an exemplary embodiment, the cooling end temperature range may be a martensitic transformation starting temperature (Ms) to a pearlite transformation starting temperature (Ps)+40 °C, the preset time may be 30 seconds or less. The cooling end temperature range and cooling time in the operation of cooling such a hot-rolled steel sheet effects on size, density, and area fraction of a region (pearlite region) in which pearlite having a relatively high carbon (C) content and/or manganese (Mn) content is locally accumulated. Specifically, when the cooling end temperature range and the cooling time are satisfied, the size, density, and area fraction of the pearlite region may be controlled to satisfy the above-described conditions, and a uniform hot-rolled structure of a ferrite matrix may be formed. On the other hand, when cooling is terminated in a temperature range exceeding the cooling termination temperature range or the cooling time exceeds, the size, density and/or area fraction of the pearlite region do not satisfy the above-mentioned conditions, and thus, strength and bending properties etc. may be reduced.

The coiling of the cooled steel sheet may be an operation of coiling the cooled steel sheet in a predetermined coiling temperature (CT) range.

In an exemplary embodiment, the CT may be controlled to a range from 550 °C to 680 °C. The CT affects the size, density and area fraction of a region (pearlite region) in which pearlite having a relatively high content of carbon (C) and/or manganese (Mn) is locally accumulated. Specifically, when the CT satisfies the temperature range of 550 °C to 680 °C, the size, density, and area fraction of the pearlite region may be controlled to satisfy the above-described conditions. On the other hand, when the CT is less than 550 °C, the fraction of a low-temperature phase is increased due to overcooling, which may increase strength and drastically increase a rolling load during cold rolling, and there is a problem in that ductility is rapidly reduced. In contrast, when the CT exceeds 680 °C, because the size, density and/or area fraction of the pearlite region may not satisfy the above-mentioned conditions, strength and bending properties may be reduced, and also, moldability and strength may deteriorate due to abnormal grain growth or excessive grain growth.

The cold rolling (S400) is an operation of cold rolling after uncoiling and pickling the steel sheet coiled in the cooling/coiling (S300). At this time, the pickling is performed for the purpose of removing a scale of the coiled steel sheet, that is, the hot rolled coil manufactured through the above hot rolling process.

In an exemplary embodiment, a reduction ratio during cold rolling may be controlled to a range from 30% to 70%. Through the controlling, the size, density, and area fraction of a region (pearlite region) in which pearlite having a relatively high content of carbon (C) and/or manganese (Mn) is locally accumulated may be controlled to satisfy the above-mentioned conditions. For example, when the reduction ratio is less than 30%, an interval between pearlites becomes narrow, and a region in which the pearlite is locally accumulated may increase, and thus strength and bending properties may be deteriorated.

The annealing heat treatment (S500) is an operation of annealing the cold rolled steel sheet at a temperature of 700 °C or higher in the cold rolling (S400). In an exemplary embodiment, the annealing heat treatment (S500) may be an operation of annealing the cold-rolled steel sheet in a temperature range from 760 °C to 850 °C. Meanwhile, the annealing heat treatment may include heating the cold-rolled sheet and cooling the heated cold-rolled sheet at a predetermined cooling rate.

The plating (S600) is an operation of forming a plating layer on the annealed heat-treated steel sheet. In an exemplary embodiment, the plating (S600) may include forming an Al-Si plating layer on the steel sheet that has been annealed in the annealing heat treatment (S500).

Specifically, the plating (S600) may include an operation of forming a hot-dip plated layer on a surface of the steel sheet by immersing the steel sheet in a plating bath having a temperature in a range from of 610 °C to 710 °C, and an operation of cooling the steel sheet on which the hot-dip plated layer is formed to form a plating layer. In this case, the plating bath may include Si, Fe, Al, Mn, Cr, Mg, Ti, Zn, Sb, Sn, Cu, Ni, Co, In, and/or Bi as an additive element, but is not limited thereto. For example, the plating bath may include an amount of 5 to 12% Si, an amount of 1 to 4% Fe, and other Al. In addition, a plating amount for front and rear surfaces of the steel sheet may be controlled to satisfy 30 to 200 g/m$^2$.

As described above, by performing a hot stamping process on the steel sheet for hot stamping manufactured through operations S 100 to S600 as described above, a molded component that satisfies required mechanical properties (e.g., tensile strength, yield strength, bending characteristics, elongation, etc.) after hot stamping may be manufactured.

The hot stamping process may include heating a blank manufactured using a steel sheet for hot stamping, forming a molded body by hot stamping the blank, and cooling the molded body to form a hot stamping component. In an exemplary embodiment, the heating of the blank may include heating the blank to a temperature of Ac3 or higher. In addition, the operation of cooling the molded body to form a hot stamping component may include cooling the molded body to 300 °C or less at an average cooling rate of 25 °C/s or greater. However, process conditions, such as a temperature range and a cooling rate applied to the hot stamping process are not limited to the above-described examples and may be variously modified.

In an exemplary embodiment, the steel sheet for hot stamping manufactured to satisfy the above-described content conditions and process conditions may satisfy the conditions for the configuration of above-described microstructure (e.g., size, density, area fraction, etc. of a pearlite region). Accordingly, the tensile strength of the molded component after hot stamping may satisfy 1,350 MPa or greater, preferably 1,350 MPa or greater, and 1,650 MPa or less. In addition, the yield strength of the molded component after hot stamping may satisfy 950 MPa or greater, preferably 950 MPa or greater, and 1,200 MPa or less. In addition, the molded component after hot stamping satisfies a bending angle of 61° to 80°, may have an elongation of 6% or greater, a welding strength in a range of 10 kN/spot to 15 kN/spot, and a carbon equivalent (Ceq) of 0.3 or less.

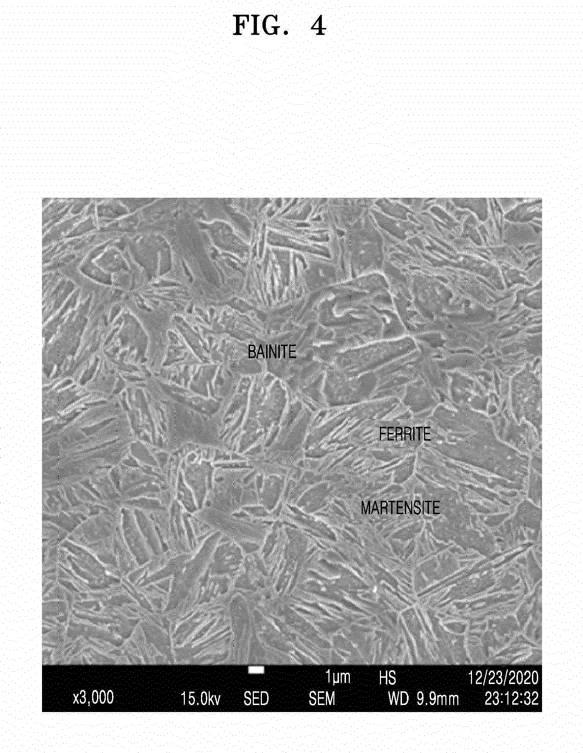

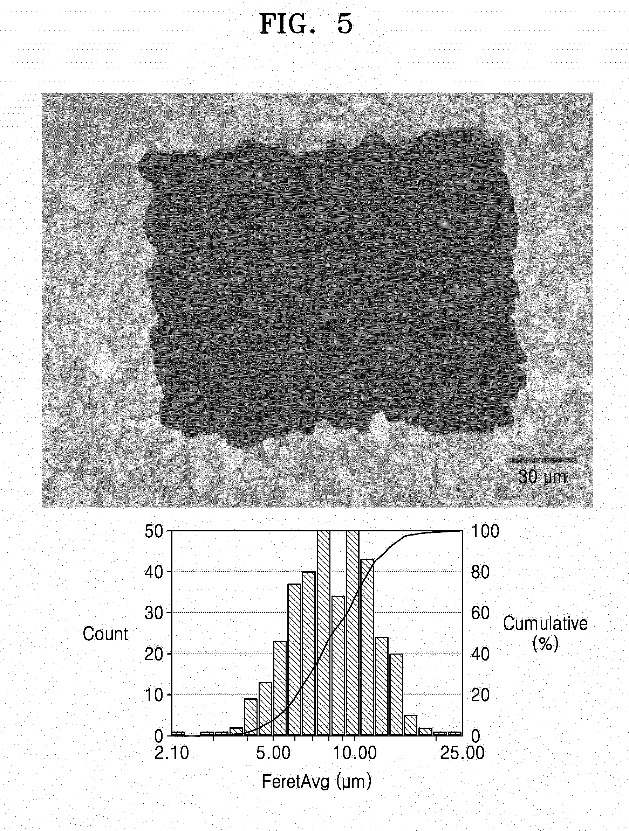

FIG. 4 is an image showing a portion of a microstructure of a molded component after hot stamping, according to an exemplary embodiment of the present disclosure, and FIG. 5 is an image showing a portion of a crystal grain of a microstructure of a molded component after hot stamping, according to an embodiment of the present disclosure. Specifically, FIGS. 4 and 5 are images showing a portion of molded component after performing a hot stamping process on a steel sheet for hot stamping manufactured to satisfy the content conditions and process conditions described above.

The molded component after hot stamping may include martensite, bainite, ferrite, and/or austenite. A ratio of the microstructure of the molded component after hot stamping and an average grain size of the microstructure may be controlled to satisfy preset conditions. Through this control, mechanical properties, such as tensile strength, yield strength, bending properties, and elongation of the molded component after hot stamping may be controlled. For example, the tensile strength of the molded component after hot stamping may satisfy 1,350 MPa or greater, preferably 1,350 MPa or greater and 1,650 MPa or less. In addition, the yield strength of the molded component after hot stamping may satisfy 950 MPa or greater, preferably 950 MPa or greater and 1,200 MPa or less. In addition, the molded component after hot stamping satisfies a bending angle in a range of 61° to 80°, and may have an elongation of 6% or greater.

In an exemplary embodiment, the microstructure of the molded component after hot stamping may include 70% or greater of martensite, 30% or less of bainite and ferrite, and 5% or less of residual carbide and retained austenite.

In an exemplary embodiment, the microstructure included in the molded component after hot stamping may be refined. Specifically, an average grain size of the microstructure included in the molded component after hot stamping may be controlled to satisfy 2 μm or greater and 15 μm or less.

Hereinafter, the present disclosure will be described in more detail through Examples and Comparative Examples. However, the following Examples and Comparative Examples are for explaining the present disclosure in more detail, and the scope of the present disclosure is not limited by the following Examples and Comparative Examples. The following Examples and Comparative Examples may be appropriately modified and changed by those skilled in the art within the scope of the present disclosure.

Table 1

| C | Si | Mn | P | S | Al | B | Ti | Nb | Cr+Mo+Ni |
|---|----|----|---|---|----|---|----|----|----------|
| 0.17~0.25 | 0.3~1.0 | 0.6~1.0 | 0.02 less | 0.01 less | 0.1~1.0 | 0.001~0.005 | 0.01~0.1 | 0.02~0.06 | 0.3~1.0 |

Table 2

| specimen | first region average length ($\mu$m) | first region average thickness ($\mu$m) | first region linear density (/$\mu$m) | first region area fraction (%) | second region area fraction (%) | After HIS molded component tensile strength (MPa) | After HIS molded component bending angle (°) |
|----------|------|------|------|------|------|------|------|
| A | 0.03 | 0.01 | 0.001 | 0.01 | 0.0 | 1489 | 80 |
| B | 8.03 | 0.09 | 0.006 | 2.16 | 0.9 | 1476 | 78 |
| C | 28.35 | 0.65 | 0.009 | 3.51 | 1.8 | 1485 | 76 |
| D | 78.83 | 0.89 | 0.015 | 4.76 | 2.6 | 1499 | 73 |
| E | 123.47 | 2.05 | 0.047 | 8.56 | 3.4 | 1486 | 70 |
| F | 166.65 | 3.34 | 0.077 | 10.55 | 3.8 | 1501 | 68 |
| G | 211.1 | 4.59 | 0.088 | 12.11 | 4.1 | 1495 | 65 |
| H | 252.2 | 4.77 | 0.093 | 13.89 | 4.5 | 1492 | 63 |
| I | 297.0 | 4.99 | 0.099 | 14.96 | 4.9 | 1498 | 61 |
| J | 318.19 | 5.22 | 0.109 | 15.13 | 5.3 | 1495 | 49 |
| K | 372.02 | 5.45 | 0.134 | 16.99 | 5.8 | 1494 | 47 |
| L | 435.44 | 6.77 | 0.245 | 18.86 | 6.98 | 1486 | 45 |
| M | 558.03 | 7.33 | 0.265 | 20.11 | 7.86 | 1502 | 44 |
| N | 605.01 | 7.43 | 0.277 | 23.45 | 9.26 | 1500 | 43 |

Table 1 shows the composition of a slab used for manufacturing a steel sheet for hot stamping, and Table 2 shows measured values for specimens corresponding to the steel sheet for hot stamping manufactured by performing the above-described operations S100 to S600 with respect to the slab having the composition shown in Table 1. For reference, the measured values are values measured based on a unit area of 160 mm$^2$ or greater according to ASTM standards.

Meanwhile, the "first region" refers to a region in which pearlite including 0.19 to 0.55 wt% of carbon (C) and 0.8 to 6.0 wt% of manganese (Mn) is locally accumulated, and the "second region" refers to a region in which pearlite including greater than 0.55 wt% of carbon (C) or pearlite including greater than 6.0 wt% of manganese (Mn) is locally accumulated.

In addition, the "average length of the first region" denotes an average length of long sides of the first regions, the "average thickness of the first region" denotes an average length of short sides of the first regions, and the "line density of the first region" denotes linear density in a short side direction of the first regions.

In addition, the bending angle is a measurement of the V-bending angle according to the standards of the German Automobile Industry Association (Verband Der Automobilindustrie (VDA)), and denotes a value of a rolling direction (RD).

Among the specimens of Table 2, Specimens A to I correspond to Embodiments, and Specimens J to N correspond to Comparative Examples. Specimens of the Embodiments and Comparative Examples are prepared by applying the same content conditions (see Table 1) and the process conditions described above, but manufactured by differentially applying only CT as a variable. Specifically, the specimens A to I of the Embodiments are manufactured by applying a CT in a range from 550 °C to 680 °C, and the specimens J to N of the Comparative Examples are manufactured by applying a CT of less than 550 °C or a CT of greater than 680 °C.

Referring to Table 2, it may be seen that in the specimens A to I, the average length of the first regions satisfies 0.01 $\mu$m or greater and 300 $\mu$m or less, the average thickness of the first regions satisfies 0.01 $\mu$m or greater and 5 $\mu$m or less, the linear density of the first regions satisfies 0.001/$\mu$m or greater and 0.1/$\mu$m or less, the area fraction of the first regions satisfies 0.01% or greater and 15% or less, and the area fraction of the second regions satisfies 5% or less. As a result, in specimens A to I, it may be seen that the tensile strength of the molded component after hot stamping satisfies 1,350 MPa or greater, and the bending angle satisfies 61° to 80°. It may be understood that by applying a CT in a range of 550 °C to 680 °C, the size, density, and area fraction of the pearlite region are controlled within a preset range.

On the other hand, specimens J to N are specimens that do not satisfy at least some of the constituent conditions of the microstructure of the steel sheet for hot stamping, it may be seen that the bending angle of the molded component after hot stamping is less than that of the specimens A to I. It may be understood that by applying a CT of less than 550 °C or a CT of greater than 680 °C, the size, density, and area fraction of the pearlite region are not controlled within the preset range.

In the case of Specimen J, the average length of the first regions is 318.19 $\mu$m exceeding 300 $\mu$m, the average thickness of the first regions is 5.22 $\mu$m exceeding 5 $\mu$m, the linear density of the first regions is 0.109/$\mu$m exceeding 0.1/$\mu$m, the area fraction of the first regions is 15.13% exceeding 15%, and the area fraction of the second regions is 5.3% exceeding 5%. Accordingly, it may be confirmed that the bending angle of specimen J is only 49°.

Specifically, in the case of specimen K, the average length of the first regions is 372.02 $\mu$m exceeding 300 $\mu$m, the average thickness of the first regions is 5.45 $\mu$m exceeding 5 $\mu$m, the linear density of the first regions is 0.1/$\mu$m exceeding 0.134/$\mu$m, the area fraction of the first regions is 16.99% exceeding 15%, and the area fraction of the second regions is 5.8% exceeding 5%. Accordingly, it may be confirmed that the bending angle of specimen K is only 47°.

In the case of Specimen L, the average length of the first regions is 435.44 $\mu$m exceeding 300 $\mu$m, the average thickness of the first regions is 6.77 $\mu$m exceeding 5 $\mu$m, the linear density of the first regions was 0.245/$\mu$m exceeding 0.1/$\mu$m, the area fraction of the first regions is 18.86% exceeding 15%, and the area fraction of the second regions is 6.98% exceeding 5%. Accordingly, it may be confirmed that the bending angle of the specimen L is only 45°.

In the case of Specimen M, the average length of the first regions is 558.03 $\mu$m exceeding 300 $\mu$m, the average thickness of the first regions is 7.33 $\mu$m exceeding 5 $\mu$m, the linear density of the first regions is 0.265/$\mu$m exceeding 0.1/$\mu$m, the area fraction of the first regions is 20.11% exceeding 15%, and the area fraction of the second regions is 7.86% exceeding 5%. Accordingly, it may be confirmed that the bending angle of the specimen M is only 44°.

In the case of Specimen N, the average length of the first regions is 605.01 $\mu$m exceeding 300 $\mu$m, the average thickness of the first regions is 7.43 $\mu$m exceeding 5 $\mu$m, the linear density of the first regions is 0.277/$\mu$m exceeding 0.1/$\mu$m, the area fraction of the first regions is 23.45% exceeding 15%, and the area fraction of the second regions is 9.26% exceeding 5%. Accordingly, it may be confirmed that the bending angle of specimen N is only 43°.

Although the present disclosure has been described with reference to the exemplary embodiment shown in the drawings, which is merely an example, it will be understood by those of ordinary skill in the art that various changes in form and details may be made therein without departing from the spirit and scope of the inventive concept. Accordingly, the scope of the invention is defined not by the detailed description of the invention but by the appended claims.

**Claims**

1. A steel sheet for hot stamping, the steel sheet comprising:

   an amount of 0.17 wt% to 0.25 wt% of carbon (C), an amount of 0.3 wt% to 1.0 wt% of silicon (Si), an amount of 0.6 wt% to 1.0 wt% of manganese (Mn), an amount of 0.02 wt% or less of phosphorus (P), an amount of 0.01 wt% or less of sulfur (S), an amount of 0.1 wt% to 1.0 wt% of aluminum (Al), an amount of 0.001 wt% to 0.005 wt% of boron (B), an amount of 0.01 wt% to 0.1 wt% of titanium (Ti), an amount of 0.02 wt% to 0.06 wt% of niobium (Nb), an amount of 0.3 wt% to 1.0 wt% of a sum of at least one of chromium (Cr), nickel (Ni), and molybdenum (Mo), the balance of iron (Fe) and other unavoidable impurities,
   wherein a microstructure includes ferrite in a range from 60% to 99% and pearlite in a range from 1% to 30% by area fraction, and comprises first regions in which pearlite including carbon (C) in a range from 0.19 wt% to 0.55 wt% and manganese (Mn) in a range from 0.8 wt% to 6.0 wt% are locally accumulated.

2. The steel sheet of claim 1, wherein, when long sides of the first regions are defined as a length of the first regions, an average length of the first regions is 0.01 $\mu$m or greater and 300 $\mu$m or less.

3. The steel sheet of claim 1, wherein, when short sides of the first regions are defined as a thicknesses of the first regions, an average thickness of the first regions is 0.01 $\mu$m or greater and 5 $\mu$m or less.

4. The steel sheet of claim 1, wherein linear density in a short side direction of the first regions is 0.001/$\mu$m or greater and 0.1/$\mu$m or less.

5. The steel sheet of claim 1, wherein an area fraction of the first regions is 0.01% or greater and 15% or less.

6. The steel sheet of claim 5, wherein the microstructure further comprises second regions in which pearlite comprising carbon (C) in an amount greater than 0.55 wt% or pearlite comprising manganese (Mn) in an amount greater than 6.0 wt% is locally accumulated,
wherein an area fraction of the second regions is 5% or less.

7. The steel sheet of claim 1, wherein a molded component after hot stamping has a tensile strength of 1,350 MPa or greater, and a bending angle is in a range of 61° to 80°.

# FIG. 1

# FIG. 2

# FIG. 3

| | |
|---|---|
| REHEAT | S100 |
| ↓ | |
| HOT ROLLING | S200 |
| ↓ | |
| COOLING/COILING | S300 |
| ↓ | |
| COLD ROLLING | S400 |
| ↓ | |
| ANNEALING HEAT TREATMENT | S500 |
| ↓ | |
| PLATING | S600 |

# FIG. 4

# FIG. 5

<table>
<tr><td colspan="2">**INTERNATIONAL SEARCH REPORT**</td><td colspan="2">International application No.<br><br>**PCT/KR2022/001481**</td></tr>
</table>

**A. CLASSIFICATION OF SUBJECT MATTER**

**C22C 38/50**(2006.01)i; **C22C 38/54**(2006.01)i; **C22C 38/44**(2006.01)i; **C22C 38/06**(2006.01)i; **C21D 8/02**(2006.01)i; **B21C 47/02**(2006.01)i

According to International Patent Classification (IPC) or to both national classification and IPC

**B. FIELDS SEARCHED**

Minimum documentation searched (classification system followed by classification symbols)

C22C 38/50(2006.01); B21B 1/26(2006.01); B21B 3/00(2006.01); C21D 6/00(2006.01); C21D 8/00(2006.01); C22C 38/00(2006.01); C22C 38/02(2006.01); C22C 38/32(2006.01); C22C 38/44(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 핫스탬핑(hot stamping), 펄라이트(pearlite), 페라이트(ferrite), 굽힘각(bending angle), 인장강도(tensile strength)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0060550 A (JFE STEEL CORPORATION) 26 May 2021 (2021-05-26)<br>See claims 1, 3-6 and 9. | 1-7 |
| X | JP 2005-002441 A (SUMITOMO METAL IND., LTD.) 06 January 2005 (2005-01-06)<br>See claims 1-4 and 11-14. | 1-7 |
| A | KR 10-2021-0037115 A (HYUNDAI STEEL COMPANY) 06 April 2021 (2021-04-06)<br>See paragraphs [0062]-[0066] and claims 1 and 7. | 1-7 |
| A | US 2013-0220490 A1 (HAYASHI et al.) 29 August 2013 (2013-08-29)<br>See claims 1 and 5. | 1-7 |
| A | KR 10-2015-0075329 A (POSCO) 03 July 2015 (2015-07-03)<br>See paragraph [0123], claim 1 and table 4. | 1-7 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 April 2022** | **18 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2022/001481**

| Patent document cited in search report | | | Publication date (day/month/year) | Patent family member(s) | | | Publication date (day/month/year) |
|---|---|---|---|---|---|---|---|
| KR | 10-2021-0060550 | A | 26 May 2021 | CN | 112930411 | A | 08 June 2021 |
| | | | | EP | 3828298 | A1 | 02 June 2021 |
| | | | | JP | 6760520 | B1 | 23 September 2020 |
| | | | | US | 2021-0381085 | A1 | 09 December 2021 |
| | | | | WO | 2020-079925 | A1 | 23 April 2020 |
| JP | 2005-002441 | A | 06 January 2005 | JP | 3888333 | B2 | 28 February 2007 |
| KR | 10-2021-0037115 | A | 06 April 2021 | | None | | |
| US | 2013-0220490 | A1 | 29 August 2013 | BR | 112013009515 | A2 | 26 July 2016 |
| | | | | BR | 112013009515 | B1 | 07 August 2018 |
| | | | | BR | 112013009517 | A2 | 26 July 2016 |
| | | | | BR | 112013009517 | B1 | 24 April 2019 |
| | | | | BR | 112013009520 | A2 | 25 July 2017 |
| | | | | BR | 112013009520 | B1 | 07 May 2019 |
| | | | | CA | 2813915 | A1 | 26 April 2012 |
| | | | | CA | 2813915 | C | 08 March 2016 |
| | | | | CA | 2814630 | A1 | 26 April 2012 |
| | | | | CA | 2814630 | C | 26 April 2016 |
| | | | | CA | 2814646 | A1 | 26 April 2012 |
| | | | | CA | 2814646 | C | 08 March 2016 |
| | | | | CN | 103168106 | A | 19 June 2013 |
| | | | | CN | 103168106 | B | 12 November 2014 |
| | | | | CN | 103261452 | A | 21 August 2013 |
| | | | | CN | 103261452 | B | 19 November 2014 |
| | | | | CN | 103314120 | A | 18 September 2013 |
| | | | | CN | 103314120 | B | 05 November 2014 |
| | | | | EP | 2631306 | A1 | 28 August 2013 |
| | | | | EP | 2631306 | B1 | 11 December 2019 |
| | | | | EP | 2631307 | A1 | 28 August 2013 |
| | | | | EP | 2631307 | B1 | 03 April 2019 |
| | | | | EP | 2631308 | A1 | 28 August 2013 |
| | | | | EP | 2631308 | B1 | 28 November 2018 |
| | | | | ES | 2711649 | T3 | 06 May 2019 |
| | | | | ES | 2729056 | T3 | 30 October 2019 |
| | | | | JP | 2013-151708 | A | 08 August 2013 |
| | | | | JP | 5224010 | B2 | 03 July 2013 |
| | | | | JP | 5293902 | B2 | 18 September 2013 |
| | | | | JP | 5547287 | B2 | 09 July 2014 |
| | | | | JP | 5752409 | B2 | 22 July 2015 |
| | | | | JP | WO2012-053636 | A1 | 24 February 2014 |
| | | | | JP | WO2012-053637 | A1 | 24 February 2014 |
| | | | | JP | WO2012-053642 | A1 | 24 February 2014 |
| | | | | KR | 10-1509362 | B1 | 07 April 2015 |
| | | | | KR | 10-1513378 | B1 | 17 April 2015 |
| | | | | KR | 10-1533164 | B1 | 01 July 2015 |
| | | | | KR | 10-2013-0055020 | A | 27 May 2013 |
| | | | | KR | 10-2013-0063541 | A | 14 June 2013 |
| | | | | KR | 10-2013-0069809 | A | 26 June 2013 |
| | | | | MX | 2013004355 | A | 28 June 2013 |
| | | | | MX | 2013004356 | A | 24 June 2013 |
| | | | | MX | 2013004357 | A | 24 June 2013 |

Form PCT/ISA/210 (patent family annex) (July 2019)

**INTERNATIONAL SEARCH REPORT**
**Information on patent family members**

International application No.

**PCT/KR2022/001481**

| Patent document cited in search report | | | Publication date (day/month/year) | Patent family member(s) | | | Publication date (day/month/year) |
|---|---|---|---|---|---|---|---|
| | | | | MX | 348196 | B | 05 June 2017 |
| | | | | MX | 359051 | B | 13 September 2018 |
| | | | | MX | 361834 | B | 18 December 2018 |
| | | | | PL | 2631307 | T3 | 30 September 2019 |
| | | | | PL | 2631308 | T3 | 31 May 2019 |
| | | | | US | 10030280 | B2 | 24 July 2018 |
| | | | | US | 2013-0199676 | A1 | 08 August 2013 |
| | | | | US | 2013-0292009 | A1 | 07 November 2013 |
| | | | | US | 2017-0051372 | A1 | 23 February 2017 |
| | | | | US | 2017-0145531 | A1 | 25 May 2017 |
| | | | | US | 9512499 | B2 | 06 December 2016 |
| | | | | US | 9598745 | B2 | 21 March 2017 |
| | | | | US | 9840751 | B2 | 12 December 2017 |
| | | | | US | 9896736 | B2 | 20 February 2018 |
| | | | | WO | 2012-053636 | A1 | 26 April 2012 |
| | | | | WO | 2012-053637 | A1 | 26 April 2012 |
| | | | | WO | 2012-053642 | A1 | 26 April 2012 |
| KR | 10-2015-0075329 | A | 03 July 2015 | CN | 105849298 | A | 10 August 2016 |
| | | | | CN | 105849298 | B | 09 March 2018 |
| | | | | EP | 3088552 | A1 | 02 November 2016 |
| | | | | EP | 3088552 | B1 | 20 February 2019 |
| | | | | EP | 3323905 | A1 | 23 May 2018 |
| | | | | EP | 3323905 | B1 | 31 March 2021 |
| | | | | ES | 2876231 | T3 | 12 November 2021 |
| | | | | JP | 2017-508069 | A | 23 March 2017 |
| | | | | JP | 6474415 | B2 | 27 February 2019 |
| | | | | MX | 2016008267 | A | 13 October 2016 |
| | | | | US | 10253388 | B2 | 09 April 2019 |
| | | | | US | 2016-0312331 | A1 | 27 October 2016 |
| | | | | WO | 2015-099382 | A1 | 02 July 2015 |

Form PCT/ISA/210 (patent family annex) (July 2019)

**EP 4 350 024 A1**

**Patent documents cited in the description**

- KR 1020170076009
- KR 1020190095858